## Europäisches Patentamt

## European Patent Office

## Office européen des brevets

(19)

(11) Veröffentlichungsnummer: **0 222 290**
**B1**

(12) # EUROPÄISCHE PATENTSCHRIFT .

(45) Veröffentlichungstag der Patentschrift:
07.02.90

(51) Int. Cl.⁴: **B29C 65/20**

(21) Anmeldenummer: 86115199.1

(22) Anmeldetag: 03.11.86

(54) Schweisseinrichtung.

(30) Priorität: 09.11.85 DE 8531749 U

(43) Veröffentlichungstag der Anmeldung:
20.05.87 Patentblatt 87/21

(45) Bekanntmachung des Hinweises auf die Patenterteilung:
07.02.90 Patentblatt 90/6

(84) Benannte Vertragsstaaten:
AT BE CH DE FR GB IT LI NL

(56) Entgegenhaltungen:
DE-A- 1 704 109
DE-A- 3 002 713
US-A- 2 698 273
US-A- 3 586 584

(73) Patentinhaber: Wegener GmbH, Vaalser Str. 81,
D-5100 Aachen(DE)

(72) Erfinder: Weissfloch, Reinhard, Dr.-Ing., Winterstrasse 4,
D-5102 Stolberg 6(DE)
Erfinder: Rech, Christian, Dipl.-Ing., Römerstrasse 102,
D-5120 Herzogenrath(DE)

(74) Vertreter: Paul, Dieter-Alfred, Dipl.-Ing.,
Fichtestrasse 18, D-4040 Neuss 1(DE)

## Beschreibung

Die Erfindung betrifft eine Schweißeinrichtung zum Verschweißen der Kanten von Kunststoffteilen, insbesondere Kunststoffplatten, mit Spanneinrichtungen zum Einspannen der Kunststoffteile, wobei jede Spanneinrichtung aus einem Spanntisch und einem Spannbalken mit daran angeordneten Spannelementen besteht und jeder Spannbalken im Bereich seiner Enden mit dem zugehörigen Spanntisch über Verbindungsglieder gekoppelt ist.

Derartige Schweißeinrichtungen sind z.B. aus der DE-A 1 704 109 bekannt. Sie weisen einen langgestreckten Grundrahmen auf, an dessen Oberseite zwei sich jeweils in Längsrichtung erstreckende Spanneinrichtungen angeordnet sind. Diese Spanneinrichtungen sind in Querrichtung synchron zueinander bewegbar und bestehen im wesentlichen jeweils aus einem in Längsrichtung sich erstreckenden Spanntisch und einem darüber angeordneten, sich ebenfalls in Längsrichtung erstreckenden Spannbalken, wobei jeder Spannbalken mit einer Vielzahl in Längsrichtung nebeneinander angeordneter, auf den zugehörigen Spanntisch absenkbarer Spannplatten versehen ist. Zwischen den beiden Spanneinrichtungen ist ein sich in Längsrichtung erstreckendes Heizschwert für die Erhitzung der miteinander zu verbindenden Kanten der Kunststoffteile angeordnet. Dieses Heizschwert läßt sich für das vor dem Erhitzen notwendige Ausrichten der Kanten der Kunststoffteile aus dem Spalt herausfahren. Für das Ausrichten ist ein besonderer Anschlagbalken vorgesehen, der aus einer horizontalen Lage vertikal in die Mitte des Spaltes zwischen den Spanneinrichtungen verschwenkbar ist.

Ein Schweißvorgang auf einer solchen Schweißeinrichtung wird dadurch eingeleitet, daß die Spanneinrichtungen gegen den Anschlagbalken verfahren werden, wobei sie jeweils an verbreiterten Abschnitten zur Anlage kommen und auf diese Weise den Anschlagbalken zusätzlich ausrichten. Es werden dann die Kunststoffteile in die Spanneinrichtungen derart eingelegt, daß sie an dem Anschlagbalken zur Anlage kommen. Nach dem Festklemmen der Kunststoffteile durch Absenken der Spannplatten gegen den jeweiligen Spanntisch werden die Spanneinrichtungen auseinandergefahren, der Anschlagbalken aus dem Spalt zwischen den Spanneinrichtungen herausgeschwenkt und das Heizschwert in diesen Spalt eingefahren. Die Spanneinrichtungen werden dann wieder aufeinander zu bewegt, bis die Kunststoffteile mit ihren zu verbindenden Kanten an dem Heizschwert anliegen. Sie erhitzen sich an dem Heizschwert und werden dann nach Wegfahren des Heizschwertes unter Aufbringung eines Schließdruckes durch die Spanneinrichtungen gegeneinander gepreßt. Nach dem Erkalten ist die Verbindung zwischen den Kunststoffteilen fertig.

Bei den bekannten Schweißeinrichtungen sind die Spannbalken fest oder nur sehr schwer lösbar mit den jeweils zugehörigen Spanntischen verbunden. Mit diesen Schweißeinrichtungen lassen sich somit keine Kunststoffteile zu geschlossenen Gebilden, beispielsweise runden oder rechteckigen Rohren, zusammenschweißen, da sie nach dem Verschweißen nicht mehr aus der Schweißeinrichtung herausnehmbar wären. Entsprechend ist der Einsatzbereich begrenzt.

In der US-AS 2 698 273 ist eine Schweißeinrichtung zum Verschweißen von Kunststoffteilen, insbesondere Kunststoffplatten offenbart, die einen Spannbalken aufweist, der einerends an einem Schenkel aufgehängt und anderenends ein hakenförmiges Verbindungsglied hat, mit dem er mit dem Spanntisch gekoppelt werden kann. Zum Verschweißen werden die Endbereiche der Kunststoffplatten übereinandergelegt und zwischen dem Spannbalken und dem Spanntisch verspannt, wobei die Verspannung durch ein aufblasbares Spannkissen erfolgt. Der Spannbalken ist mit einer Heizeinrichtung versehen, über die die für das Verschweißen der Endbereiche der Kunststoffplatten notwendige Wärme aufgebracht wird.

Diese Vorrichtung weicht schon gattungsmäßig erheblich von der hier beanspruchten Vorrichtung ab. Soweit in der Druckschrift von der Herstellung geschlossener Kunststoffgegenstände, insbesondere Rohre, die Rede ist, geschieht die Verschweißung in Umfangsrichtung.

Diese Aufgabe wird erfindungsgemäß dadurch gelöst, daß die Verbindungsglieder jeweils an einem Ende als Schwenkgelenk und am anderen Ende als Schnellentriegelung ausgebildet und zumindest die Schnellentriegelungen höhenverstellbar sind und daß im Bereich der Schwenkgelenke Stützeinrichtungen zum Abstützen der Spannbalken bei gelösten Schnellentriegelungen vorgesehen sind.

Erfindungsgemäß ist dabei unter einer Schnellentriegelung die Ausbildung der Verbindungsglieder in der Weise zu verstehen, daß die Verbindung zwischen den Spannbalken und Spanntischen einfach und schnell gelöst werden kann, so daß ein in Umfangsrichtung geschlossen zusammengeschweißtes Kunststoffgebilde zu einer Seite der Schweißeinrichtung nach Lösen der dortigen Verbindungen zwischen den Spannbalken und Spanntischen herausgezogen werden kann. Auf diese Weise kann die bekannte Schweißeinrichtung zum Herstellen von Rohren aus zwei miteinander verschweißten Kunststoffteilen verwendet werden, wodurch die Vielseitigkeit dieser Einrichtung wesentlich verbessert wird. Dabei sorgen die Stützeinrichtungen dafür, daß sich die Schnellentriegelungen leicht lösen und wieder verriegeln lassen und die Spannbalken nach dem Lösen der Schnellentriegelungen nicht auf den Spanntisch fallen. Die Höhenverstellbarkeit der Schnellentriegelungen erweitert den Einsatzbereich der Schweißvorrichtung bezüglich der Dicke der zu verschweißenden Kunststoffteile.

Die Schnellentriegelungen können auf vielfältige Weise ausgebildet werden. Eine einfache Möglichkeit besteht darin, sie formschlüssig auszubilden. Eine solche Schnellentriegelung weist beispielsweise einen Verriegelungsbolzen auf, der einerends vertikal verschieblich geführt und dort in zumindest einer Stellung verriegelbar ist und anderenends mit einem in eine Öffnung einfahrbaren, durch Drehung des Verriegelungsbolzens blockierenden Riegel versehen ist. Diese Art von Schnellentriegelung ist besonders einfach und funktionell sicher.

In weiterer Ausbildung ist vorgesehen, daß die Verriegelungsbolzen in ihren Führungen in unterschiedlicher Höhe verriegelbar sind. Auf diese Weise kann der Abstand des Spannbalkens zum Spanntisch verändert werden, was insbesondere dann sinnvoll ist, wenn die Spannbalken auch an dem jeweils anderen Ende in bezug auf den Spanntisch höhenverstellbar ausgebildet sind. Mit einer solchermaßen ausgebildeten Schweißeinrichtung lassen sich dann Kunststoffteile innerhalb eines sehr großen Dickenbereiches miteinander verschweißen.

Zweckmäßigerweise haben die Verriegelungsbolzen jeweils einen nach außen ragenden Handhebel, der in Schlitzen der Führungen für die Verriegelungsbolzen geführt ist. Die Handhabung einer solchen Schnellentriegelung ist damit sehr einfach.

Alternativ zur formschlüssigen Schnellentriegelung können sie auch als in gekoppeltem Zustand kraftschlüssig blockierte Verbindungen zwischen den Spannbalken und Spanntischen ausgebildet sein. Dies kann beispielsweise durch entsprechende Klemmeinrichtungen oder aber auch durch Elektromagneten geschehen.

Besonders vorteilhaft ist es, wenn auch die Schwenkgelenke höhenverstellbar ausgebildet werden, da sich auf diese Weise der Abstand der Spannbalken zu dem zugehörigen Spanntisch entsprechend der Dicke der jeweils zu verschweißenden Kunststoffteile über einen sehr weiten Bereich einstellen läßt, mit einer derart ausgebildeten Schweißeinrichtung also Kunststoffteile verschiedener Dicke bearbeitet werden können. Zumindest sollten für die Spannbalken zwei in unterschiedlicher Höhe angeordnete Schwenkgelenke vorgesehen sein, damit sich die Spannbalken in zwei unterschiedlichen Höhen montieren lassen.

Die Stützeinrichtungen sind vorteilhafterweise jeweils mit einer Federabstützung versehen, um das Lösen oder Fixieren der Trenneinrichtung zu erleichtern.

Im Hinblick auf eine Verstellbarkeit des Abstandes zwischen den Spannbalken und Spanntischen ist es zudem empfehlenswert, wenn die Stützeinrichtungen höhenverstellbar ausgebildet werden, um ihre Stützwirkung dem jeweiligen Abstand anpassen zu können. Hierzu könnten beispielsweise die Stützeinrichtungen jeweils einen im Spanntisch drehbar gelagerten Bolzen aufweisen, der mit einem Gewinde versehen ist, auf dem vertikal verschieblich, aber drehfest gehalten, eine Abstützmutter gelagert ist, auf der sich dann der Spannbalken abstützt. Zweckmäßigerweise sollte dann zwischen der Abstützmutter und dem Spannbalken ein Tellerfederpaket angeordnet sein.

In der Zeichnung ist die Erfindung an Hand eines Ausführungsbeispiels näher veranschaulicht. Es zeigen:

Figur (1) eine Seitenansicht einer Schweißeinrichtung mit Trenneinrichtungen;
Figur (2) einen Querschnitt durch diese Schweißeinrichtung in einer Vertikalebene und
Figur (3) die Trenneinrichtung gemäß Figur (1) in vergrößerter Darstellung.

Die Schweißeinrichtung (1) hat einen langgestreckten Grundrahmen (2), der allseitig mit Verkleidungsplatten (3, 4, 5, 6) umgeben ist. Sie weist zwei in Längsrichtung sich erstreckende Spanneinrichtungen (7, 8) auf, die im wesentlichen jeweils aus einem Spannbalken (9, 10) mit jeweils zwölf Spannplatten - beispielhaft mit (11, 12) bezeichnet - sowie jeweils einem darunter vorgesehenen Spanntisch (13, 14) bestehen.

In den Spannbalken (9, 10) ist für jede Spannplatte (11, 12) ein pneumatischer Betätigungszylinder (15, 16) angeordnet, die über Schlauchleitungen (17, 18) von einer Druckluftquelle gespeist werden und durch entsprechende Druckbeaufschlagung eine vertikale Bewegung der Spannplatten (11, 12) bewirken können. Die unterhalb der Spannplatten (11, 12) angeordneten beiden Spanntische (13, 14) - von denen der in Figur (2) linke Spanntisch (13) nur teilweise dargestellt ist - sind jeweils fest mit im Querschnitt H-förmigen, sich ebenfalls über die gesamte Länge der Schweißeinrichtung (1) erstreckende Tischträger (19, 20) verbunden, die in Längsrichtung verteilt an mehreren Stellen über Linearführungseinrichtungen (21, 22) querverschieblich - also horizontal und quer zur Längserstreckung der Schweißeinrichtung (1) - gelagert sind. Der Antrieb für die Querbewegung ist aus Vereinfachungsgründen nicht näher dargestellt. Die Enden der Tischträger (19, 20) sind mit den zugehörigen Spannbalken (9) bzw. (10) verbunden, und zwar jeweils an dem in Figur (1) rechten Ende über ein Gelenk (23) und an dem in Figur (1) linken Ende über eine eine Trenneinrichtung bildende Verriegelungseinrichtung (24). Jede Verriegelungseinrichtung (24) weist einen in dem betreffenden Spannbalken (9, 10) geführten Verriegelungsbolzen (25) auf, der in verriegeltem Zustand formschlüssig in die jeweils zugehörige Spannplatte (11, 12) eingreift. Durch Verdrehen eines Handhebels (26) kann der Verriegelungsbolzen (25) entriegelt werden, was ein Hochschwenken des betreffenden Spannbalkens (9, 10) zuläßt.

Damit die Spannbalken (9, 10) nach dem Entriegeln nicht auf die Spanntische (13, 14) fallen, weist jeder Spannbalken (9, 10) im Bereich der Gelenke (23) eine Stützeinrichtung (27) auf. Jede Stützeinrichtung (27) hat einen auf dem jeweiligen Spanntisch (13, 14) drehbar gelagerten Schraubbolzen (28), der durch den betreffenden Spannbalken (9, 10) hindurchgeht und innerhalb des jeweiligen Spannbalkens (9, 10) eine Stützmutter (29) trägt, die mit dem Schraubbolzen (28) über ein Gewinde verbunden ist. Zwischen der Oberseite der Stützmutter (29) und der Innenseite des Spannbalkens (9) bzw. (10) befindet sich ein Tellerfederpaket (30), an dem sich der betreffende Spannbalken (9) bzw. (10) federnd abstützt.

Zur Einstellung der Stützkraft kann der Schraubbolzen (28) mittels eines oben anzusetzenden Werkzeuges verdreht werden. Hierdurch kann die Höhe der Stützmutter (29), die innerhalb des betreffenden Spannbalkens (9) bzw. (10) verdrehfest, aber verschieblich gelagert ist, eingestellt werden. Die Einstellung kann dann so getroffen werden, daß der Spannbalken (9) bzw. (10) nach Lösen der betreffenden Verriegelungseinrichtung (24) in der Schwebe gehalten oder sogar leicht geöffnet wird. Auf diese Weise läßt sich ein geschlossen verschweißtes Werkstück nach vorn, d.h. in der Ansicht gemäß Figur (1) nach links herausziehen.

Im übrigen sind die Gelenke (23) so ausgebildet, daß die Spannbalken (9, 10) in zumindest zwei verschiedenen Höhen gelagert werden können, um größere Dickenunterschiede bei den zu verschweißenden Kunststoffplatten ausgleichen zu können. Die Stützeinrichtungen (27) und die Verriegelungseinrichtungen (24) lassen sich dann im vorbeschriebenen Sinne entsprechend anpassen.

Wie aus Figur (2) zu ersehen ist, ist im Bereich des Spaltes (31) zwischen den beiden Spanneinrichtungen (7, 8) ein sich über die Länge der Schweißeinrichtung (1) erstreckendes Heizschwert (32) rechteckigen Querschnitts angeordnet, das auf einem Anschlagbalken (33) befestigt ist. Der Anschlagbalken (33) sitzt unmittelbar unterhalb des Heizschwertes (32) und ist als rechteckiges Hohlprofil ausgebildet. An seinen Längsseitenflächen sind Anschlagleisten (34, 35) mittels Schrauben lösbar befestigt. Die Länge des Anschlagbalkens (33) und der Anschlagleisten (34, 35) entspricht der des Heizschwertes (32). Der Anschlagbalken (33) sitzt auf mehreren vertikalen Führungsstangen (36), die über Pneumatikzylinder vertikal verfahrbar sind. Mit deren Hilfe können somit Heizschwert (32) und Anschlagbalken (33) in den Richtungen der Doppelpfeile A bewegt werden.

An der in Figur (1) linken Seite der Schweißeinrichtung (1) ist ein vor die Stirnseite auskragender Halter (36) für ein hier nicht näher dargestelltes Bedienungspult angelenkt. Er läßt sich in einer horizontalen Ebene zur Seite schwenken.

Das Verschweißen von zwei Kunststoffplatten geschieht mit Hilfe der vorbeschriebenen Schweißeinrichtung (1) wie folgt.

Zunächst werden die Spanneinrichtungen (7, 8) auseinandergefahren, so daß Heizschwert (32) und Anschlagbalken (33) so weit in den Spalt (31) hochgefahren werden können, daß die Anschlagleisten (34, 35) auf gleicher Höhe mit den Spanntischen (13, 14) zu liegen kommen. Die Spanneinrichtungen (7, 8) werden dann so weit zusammengefahren, bis die freien Kanten der Spanntische (13, 14) zur Anlage an den Anschlagleisten (34, 35) kommen. Es wird dann der Schließdruck aufgebracht, so daß der Anschlagbalken (33) gerade ausgerichtet wird. Es wird nun von beiden Seiten je eine Kunststoffplatte in je eine Spanneinrichtung (7, 8) eingelegt, und zwar zwischen die Spannplatten (11, 12) und die Spanntische (13, 14). Dabei werden sie so weit vorgeschoben, bis sie am Anschlagbalken (33) oberhalb der Anschlagleisten (34, 35) anliegen. Die Kunststoffplatten stehen dann also entsprechend der Dicke der Anschlagleisten (34, 35) über die freien Kanten der Spanntische (13, 14) vor. Durch Absenken der Spannplatten (11, 12) - bewirkt durch Druckbeaufschlagung der Betätigungszylinder (15, 16) - werden dann die Kunststoffplatten in dieser Stellung festgeklemmt, so daß sie sich nicht mehr relativ zu den jeweils betreffenden Spanneinrichtungen (7, 8) bewegen können.

Nach diesem Ausrichtvorgang werden die Spanneinrichtungen (7, 8) auseinandergefahren. Gleichzeitig werden Heizschwert (32) und Anschlagbalken (33) in die in Figur (2) gezeigte Stellung abgesenkt, so daß das Heizschwert (32) in den Spalt (31) zwischen den Spanntischen (13, 14) zu liegen kommt. Die Spanneinrichtungen (7, 8) werden dann wieder aufeinander zubewegt, bis die überstehenden Kanten der zu verbindenden Kunststoffplatten an dem Heizschwert (32) zur Anlage kommen.

Anschließend wird ein Anschmelzdruck aufgebracht. Die zu verbindenden Kanten der Kunststoffplatten werden durch das auf einer entsprechenden Temperatur erhitzte Heizschwert (32) in einen plastischen Zustand versetzt, der eine Verbindung der Kanten ermöglicht. Dann wird der Spalt (31) nochmals geöffnet, damit das Heizschwert (32) unterhalb der Ebene der Spannplatten (11, 12) abgesenkt werden kann. Anschließend werden die Spanneinrichtungen (7, 8) wieder aufeinander zugefahren, bis sich die plastifizierten Kanten der Kunststoffplatten berühren. Es wird dann ein definierter Schließdruck aufgegeben.

Nach Beendigung des Schweißvorgangs werden die Spannplatten (11, 12) durch Federn bei drucklos geschalteten Betätigungszylindern (15, 16) angehoben sowie der Spalt (31) geöffnet. Die nunmehr zusammengeschweißte Kunststoffplatte kann dann seitlich aus der Schweißeinrichtung (1) herausgenommen werden. Handelt es sich bei dem Kunststoffteil nach dem Verschweißen um ein geschlossenes Formstück, beispielsweise ein Rohrstück, so kann dieses Kunststoffteil nach Lösen der Verriegelungseinrichtung (24) zur vorderen Stirnseite der Schweißeinrichtung (1) herausgezogen werden.

In Figur (3) ist die Verriegelungseinrichtung (24) deutlicher zu sehen, und zwar in einem vertikalen Querschnitt durch die Schweißeinrichtung (1) mit Blick auf deren Frontseite, wobei die linke Seite der Schweißeinrichtung (1) weggelassen ist. Zu erkennen ist der H-förmige Tischträger (19) mit dem darauf angebrachten Spanntisch (13).

Oberhalb des Spanntisches (13) ist eine Führung (37) angeordnet, die mit dem hier nicht sichtbaren Spannbalken (9) verbunden ist. Die Führung (37) hat eine kreisrunde Bohrung (38), in der der ebenfalls mit kreisförmigem Querschnitt ausgestattete Verriegelungsbolzen (25) vertikal verschieblich geführt ist. Mit seinem unteren Ende ragt der Verriegelungsbolzen (25) in ein sich senkrecht zur Zeichnungsebene erstreckendes Langloch (39) im Spanntisch (13) hinein. Hierzu weist der Verriegelungsbolzen ein im Querschnitt kreisförmiges Zwischenstück mit geringerem Durchmesser als der Verriegelungsbolzen (25) auf, an dessen unterem Ende ein Riegel (41) angeformt ist, der die Form des Langlochs (39) hat, in der hier gezeigten verriegelten Stellung aber um 90° gegenüber dem Langloch (39) verdreht ist. Auf diese Weise unterfassen die Enden des Riegels (41) den Spanntisch (13).

Der im Querschnitt dargestellte Handhebel (26) ist im Bereich des oberen Endes des Verriegelungsbolzens (25) angebracht. Er ist in der gezeigten Stellung in einem von insgesamt vier Horizontalschlitzen (42, 43, 44, 45) - und zwar in den zweitobersten - eingerastet, so daß sich der Verriegelungsbolzen (25) nicht in vertikaler Richtung bewegen kann. Die Horizontalschlitze (42, 43, 44, 45) sind durch einen - nur in Figur (1) sichtbaren - Vertikalschlitz (46) miteinander verbunden.

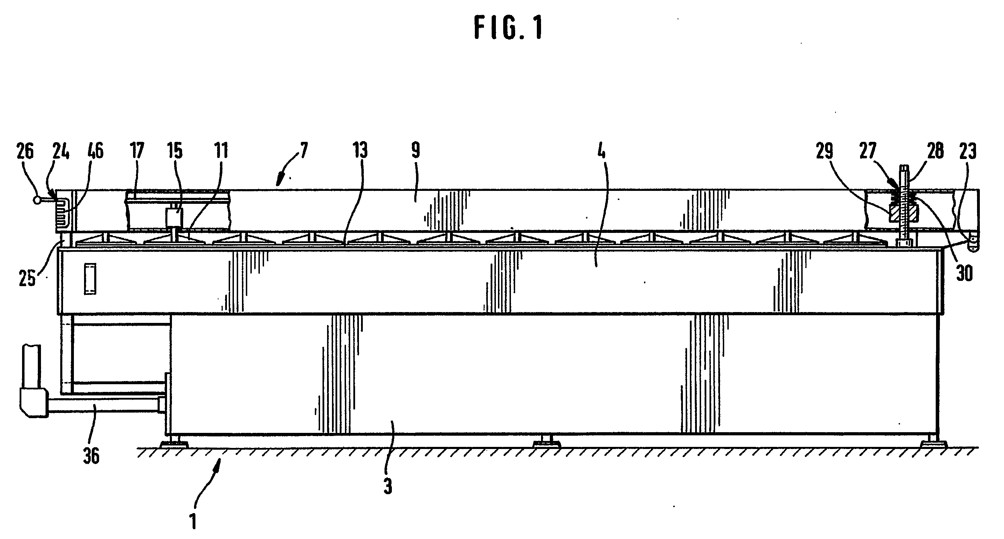

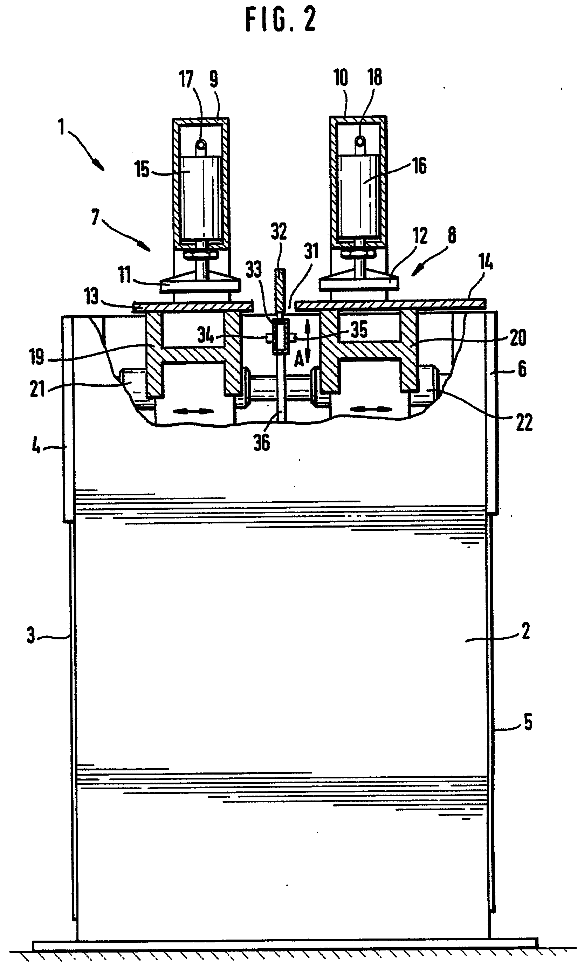

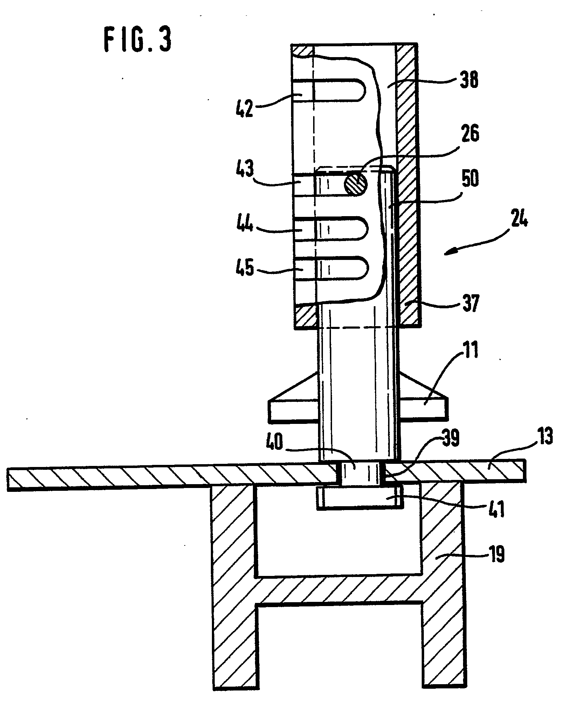

Durch Verschwenken des Handhebels (26) in die Ebene des Vertikalschlitzes (46) wird der Verriegelungsbolzen (25) derart verdreht, daß sein Riegel (41) mit dem Langloch (39) deckungsgleich ist. Der Handhebel (26) und damit der Verriegelungsbolzen (25) können dann entlang des Vertikalschlitzes (46) bis zum obersten Horizontalschlitz (42) angehoben werden, so daß der Riegel (41) aus dem Spanntisch (13) herausfährt. Der Spannbalken (9) wird dabei durch die Stützeinrichtung (27) (Figur 1) in der Schwebe gehalten. Durch Verschwenken des Handhebels (26) in den Horizonalschlitz (42) kann der Verriegelungsbolzen (25) in dieser Stellung blockiert werden. Hier durch entsteht ein freier Abstand, der dem zwischen Spannplatte (11) und der Oberfläche des Spanntisches (13) entspricht. Dies ermöglicht ein Herausziehen eines verschweißten Kunststoffteils, vorausgesetzt natürlich, daß auch die hier nicht dargestellte Verriegelungseinrichtung zwischen Spannbalken (10) und Spanntisch (14) entsprechend gelöst worden ist.

Nach dem Herausziehen des fertigen Kunststoffteils können Spannbalken (9) und Spanntisch (13) wieder miteinander verbunden werden, und zwar durch Absenken des Verriegelungsbolzen (25) entlang des Vertikalschlitzes (46) und anschließendes Verdrehen um 90°, damit der Handhebel (26) in eine der Horizontalschlitze (43 bis 45) einrastet. Da mehrere Horizontalschlitze (43 bis 45) vorgesehen sind, ist eine Verriegelung zwischen Spannbalken (9) und Spanntisch (13) auch bei unterschiedlichem Abstand zwischen beiden möglich.

Ein Hochschieben des Verriegelungsbolzens (25) nach Verdrehen des Handhebels (26) in den Vertikalschlitz (46) kann dann entfallen, wenn das Tellerfederpaket (30) (Figur 1) der Stützeinrichtung (27) eine solch hohe Vorspannung hat, daß der Spannbalken (9) nach Lösen des Verriegelungsbolzens (25) angehoben wird, so daß der für das Herausziehen des fertigen Kunststoffteils notwendige Abstand zwischen Verriegelungsbolzen (25) und Spannplatte (11) durch die Hochschwenkbewegung des Spannbalkens (9) entsteht. Zum anschließenden Verriegeln muß dann der Spannbalken (9) wieder so weit heruntergedrückt werden, daß der Verriegelungsbolzen (25) mit seinem Riegel (41) in das Langloch (39) einfährt.

## Patentansprüche

1. Schweißeinrichtung zum Verschweißen der Kanten von Kunststoffteilen, insbesondere Kunststoffplatten, mit Spanneinrichtungen zum Einspannen der Kunststoffteile, wobei jede Spanneinrichtung aus einem Spanntisch und einem Spannbalken mit daran angeordneten Spannelementen besteht und jeder Spannbalken im Bereich seiner Enden mit dem zugehörigen Spanntisch über Verbindungsglieder gekoppelt ist, dadurch gekennzeichnet, daß die Verbindungsglieder jeweils an einem Ende als Schwenkgelenk (23) und am anderen Ende als Schnellentriegelung (24) ausgebildet und zumindest die Schnellentriegelungen (24) höhenverstellbar sind und daß im Bereich der Schwenkgelenke (23) Stützeinrichtungen (27) zum Abstützen der Spannbalken (9, 10) bei gelösten Schnellentriegelungen (24) vorgesehen sind.

2. Schweißeinrichtung nach Anspruch 1, dadurch gekennzeichnet, daß die Schnellentriegelungen (24) formschlüssig ausgebildet sind.

3. Schweißeinrichtung nach Anspruch 2, dadurch gekennzeichnet, daß jede Schnellentriegelung (24) einen Verriegelungsbolzen (25) aufweist, der einerends vertikal verschieblich geführt und dort in zumindest einer Stellung verriegelbar ist und anderenends mit einem in eine Öffnung (39) einfahrbaren, durch Drehung des Verriegelungsbolzens (25) blockierenden Riegel (41) versehen ist.

4. Schweißeinrichtung nach Anspruch 3, dadurch gekennzeichnet, daß die Verriegelungsbolzen (25) in ihren Führungen (37) in unterschiedlicher Höhe verriegelbar sind.

5. Schweißeinrichtung nach Anspruch (3) oder (4), dadurch gekennzeichnet, daß die Verriegelungsbolzen (25) jeweils einen nach außen ragenden Handhebel (26) aufweisen, der in Schlitzen (42, 43, 44, 45) der Führungen (37) für die Verriegelungsbolzen (25) geführt ist.

6. Schweißeinrichtung nach Anspruch (1), dadurch gekennzeichnet, daß die Schnellentriegelungen als in gekoppeltem Zustand kraftschlüssig blockierte Verbindungen ausgebildet sind.

7. Schweißeinrichtung nach Anspruch (6), dadurch gekennzeichnet, daß die Schnellentriegelungen jeweils aus einem Elektromagneten bestehen.

8. Schweißeinrichtung nach einem der Ansprüche (1) bis (7), dadurch gekennzeichnet, daß auch die Schwenkgelenke (23) höhenverstellbar ausgebildet sind.

9. Schweißeinrichtung nach Anspruch (8), dadurch gekennzeichnet, daß für die Spannbalken (9, 10) zumindest zwei in unterschiedlicher Höhe angeordnete Schwenkgelenke (23) vorgesehen sind.

10. Schweißeinrichtung nach einem der Ansprüche (1) bis (9), dadurch gekennzeichnet, daß die Stützeinrichtungen (27) jeweils mit einer Federabstützung (30) versehen sind.

11. Schweißeinrichtung nach einem der Ansprüche (1) bis (10), dadurch gekennzeichnet, daß die Stützeinrichtungen (27) höhenverstellbar ausgebildet sind.

12. Schweißeinrichtung nach Anspruch (10), dadurch gekennzeichnet, daß die Stützeinrichtungen (27) jeweils einen im Spanntisch (13) drehbar gelagerten Bolzen (28) aufweisen, der mit einem Gewinde versehen ist, auf dem vertikal verschieblich, aber drehfest gehalten eine Abstützmutter (29) gelagert ist.

13. Schweißeinrichtung nach Anspruch (11), dadurch gekennzeichnet, daß zwischen Abstützmutter (29) und Spannbalken (9) ein Tellerfederpaket (30) angeordnet ist.

## Claims

1. Welding device for welding together the edges of plastic parts, in particular plastic sheets, having clamping devices for clamping the plastic parts, each clamping device comprising a clamping table and a clamping beam with clamping elements arranged thereon and each clamping beam being coupled in the region of its ends to the associated clamping platen via connecting members, characterized in that the connecting members are in each case designed at one end as a swivel hinge (23) and at the other end as a rapid-unlocking arrangement (24) and at least the rapid-unlocking arrangements (24) are vertically adjustable and in that supporting devices (27) for supporting the clamping beams (9, 10) when the rapid-unlocking arrangements (24) have been released are provided in the region of the swivel hinges (23).

2. Welding device according to Claim (1), characterized in that the rapid-unlocking arrangements (24) are of positive-locking design.

3. Welding device according to Claim (2), characterized in that each rapid-unlocking arrangement (24) has a lock bolt (25) which at one end is guided with vertical displaceability and is lockable there in at least one position and at the other end is provided with a blocking bar (41) which can be driven into an opening (39) and blocks as a result of rotation of the lock bolt (25).

4. Welding device according to Claim (3), characterized in that the lock bolts (25) can be locked at different heights in their guides (37).

5. Welding device according to Claim (3) or (4), characterized in that the lock bolts (25) in each case have an outward-protruding hand lever (26) which is guided in slots (42, 43, 44, 45) of the guides (37) for the lock bolts (25).

6. Welding device according to Claim (1), characterized in that the rapid-unlocking arrangements are designed as connections which are blocked non-positively in the coupled state.

7. Welding device according to Claim (6), characterized in that the rapid-unlocking arrangements in each case comprise an electromagnet.

8. Welding device according to one of Claims (1) to (7), characterized in that the swivel hinges (23) are also vertically adjustable.

9. Welding device according to Claim (8), characterized in that at least two swivel hinges (23) arranged at different heights are provided for the clamping beams (9, 10).

10. Welding device according to one of Claims (1) to (9), characterized in that the supporting devices (27) are in each case provided with a spring support (30).

11. Welding device according to one of Claims (1) to (10), characterized in that the supporting devices (27) are of vertically adjustable design.

12. Welding device according to Claim (10), characterized in that the supporting devices (27) in each case have a bolt (28) which is rotatably mounted in the clamping platen (13) and is provided with a thread by which a supporting nut (29) is mounted so as to be vertically displaceable but held rotationally fast.

13. Welding device according to Claim (11), characterized in that a Belleville washer assembly (30) is arranged between supporting nut (29) and clamping beam (9).

## Revendications

1. Dispositif de soudage, destiné à souder les bords de pièces en matière plastique, notamment de plaques en matière plastique, et comprenant des dispositifs de serrage destinés à serrer les pièces en matière plastique, chaque dispositif de serrage étant constitué d'un banc de serrage et d'une barre de serrage sur laquelle sont montés des éléments de serrage et chaque barre de serrage étant accouplée dans la région de ses extrémités au banc conjugué par des organes de liaison, caractérisé en ce que les organes de liaison sont constitués respectivement à l'une des extrémités d'une articulation à basculement (23) et à l'autre extrémité d'un dispositif de déverrouillage rapide (24), au moins le dispositif de déverrouillage rapide (24) étant réglable en hauteur, et en ce que, dans la région de l'articulation à basculement (23), il est prévu des dispositifs d'appui (27) destinés à soutenir les barres de serrage (9, 10) lorsque les dispositifs de déverrouillage rapides (24) sont déverrouillés.

2. Dispositif de soudage suivant la revendication 1, caractérisé en ce que les dispositifs de déverrouillage rapides (24) sont des dispositifs à complémentarité de forme.

3. Dispositif de soudage suivant la revendication 2, caractérisé en ce que chaque dispositif de déverrouillage rapide (24) comporte un loquet de verrouillage (25) qui, d'une part, coulisse verticalement et peut être verrouillé au moins en une position et qui, d'autre part, est muni d'un pêne pouvant pénétrer dans une gâche (39) et se bloquer par rotation du loquet de verrouillage (25).

4. Dispositif de soudage suivant la revendication 3, caractérisé en ce que les loquets de verrouillage (25) peuvent être réglés à des niveaux différents dans leur glissière (37).

5. Dispositif de soudage suivant la revendication 3 ou 4, caractérisé en ce que les loquets de verrouillage (25) comportent chacun un levier de manœuvre (26) qui fait saillie vers l'extérieur et qui est guidé dans des fentes (42, 43, 44, 45) des glissières (37) des loquets de verrouillage (25).

6. Dispositif de soudage suivant la revendication 1, caractérisé en ce que les dispositifs de déverrouillage rapides sont constitués sous la forme de liaisons bloquées positivement à l'état accouplé.

7. Dispositif de soudage suivant la revendication 6, caractérisé en ce que les dispositifs de déverrouillage rapides sont constitués respectivement d'un électroaimant.

8. Dispositif de soudage suivant l'une des revendications 1 à 7, caractérisé en ce que les articula-

**EP 0 222 290 B1**

tions de basculement (23) sont aussi constituées de manière à être réglables en hauteur.

9. Dispositif de soudage suivant la revendication 8, caractérisé en ce qu'il est prévu, pour les barres de serrage (9, 10), au moins deux articulations de basculement (23) disposées à des niveaux différents.

10. Dispositif de soudage suivant l'une des revendications 1 à 9, caractérisé en ce que les dispositifs d'appui (27) sont munis chacun d'un appui élastique (30).

11. Dispositif de soudage suivant l'une des revendications 1 à 10, caractérisé en ce que les dispositifs d'appui (27) sont constitués de manière à être réglables en hauteur.

12. Dispositif de soudage suivant la revendication 10, caractérisé en ce que les dispositifs d'appui (27) comportent chacun un boulon (28) monté tournant dans le banc de serrage (13) et muni d'un filetage sur lequel est monté un écrou d'appui (29) qui peut coulisser verticalement, mais qui est empêché de tourner.

13. Dispositif de soudage suivant la revendication 11, caractérisé en ce qu'un paquet de ressorts à disque (30) est monté entre l'écrou d'appui (29) et la barre de serrage (9).

# FIG.1

EP 0 222 290 B1

# FIG. 2

# FIG. 3